# EUROPÄISCHE PATENTSCHRIFT

(11) **EP 1 034 695 B1**
(45) Veröffentlichungstag und Bekanntmachung des Hinweises auf die Patenterteilung: **06.11.2002**
(21) Anmeldenummer: 00104333.0
(22) Anmeldetag: 02.03.2000
(51) Int. Cl.: A01F 15/08

(54) **Landwirtschaftliche Rundballenpresse mit einer Wägeeinrichtung**
Agricultural round baler with a weighing device
Presse agricole à balles rondes avec dispositif de pesage

(30) Priorität: 10.03.1999 DE 19910555
(43) Veröffentlichungstag der Anmeldung: 13.09.2000
(73) Patentinhaber: Lely Maschinenfabrik GmbH, 38304 Wolfenbüttel (DE)
(72) Erfinder: Arnold, Martin, 38259 Salzgitter-Bad (DE)

(56) Entgegenhaltungen:
- DE-U- 8 213 107
- US-A- 3 820 453
- US-A- 4 362 097
- US-A- 5 384 436

## Beschreibung

Die Erfindung betrifft eine landwirtschaftliche Rundballenpresse mit einer Wägeeinrichtung zur Erfassung der Gewichtskraft von gepreßten Rundballen aus Heu, Stroh oder angewelktem Grüngut.

Die vorstehend beschriebene Rundballenpresse läßt sich der US-PS 4.362.097 entnehmen. Hier ist eine Radschwinge auf einer Seite schwenkbar an der Rundballenpresse angelenkt und mit dieser durch einen Hydrozylinder verbunden. An den Hydrozylinder ist ein Manometer zur Druckmessung angeschlossen. Der Hydraulikdruck soll als Maß für das Gewicht des Ballens in der Rundballenpresse dienen. Nimmt das Ballengewicht zu, senkt sich das Preßraumgehäuse relativ zur Tragachse, der Kolben fährt in den Zylinder ein und der Hydraulikdruck steigt. Nachteilig ist die Anordnung der Wägeeinrichtung an nur einer Pressenseite, was zu ungenauen Wägeergebnissen führt. Darüber hinaus sind keine Einrichtungen vorgesehen, um durch Quer- und/oder Längsneigung der Rundballenpresse verfälschte Wägeergebnisse zu korrigieren. Diese vorbekannte Wägeeinrichtung ist nur mit großem Aufwand nachrüstbar, erfordert eine aufwendige Kalibrierung im eingebauten Zustand und ist insbesondere bei relativ geringen Ballengewichten, z. B. in Stroh ca. 350 kg/Ballen, ungenau, weil die Wägeeinrichtung das Leergewicht der Rundballenpresse mit erfaßt, welches ein Vielfaches des eigentlichen Ballengewichtes ausmachen kann und Fahrwerkskräfte als Störgrößen in die Wägung eingehen.

Durch den Aufsatz Ansätze zur automatisierten Arbeitszeitermittlung bei Feldarbeiten, 51. Jahrgang LANDTECHNIK 4/96, S. 198/199" ist eine Ertragsermittlung durch Wägung mit Hilfe von Dehnungsmeßstreifen oder durch Messung der Vertikalbeschleunigung an Deichsel/Achse von Rundballenpressen bekannt geworden. Auch hierfür gelten die Nachteile der US-PS 4.362.097.

In der DE 195 43 343 A 1 ist in Zusammenhang mit einer Gesamtgewichtsmessung einer Ballenpresse erwähnt, daß bei der Gewichtsmessung während des Auswurfes des Rundballens zu beachten ist, daß sich dieser in Bewegung befindet und aus der Bewegung wiederum Störgrößen die Ermittlung des korrekten Gewichtswertes verhindern können. Als Lösung dieses Problems schlägt die DE 195 43 343 u. a. vor, den Rundballen kurz für einen Wiegevorgang zu stoppen, durch geeignete Sensoren die Störgrößen zu ermitteln und auszufiltem sowie durch mehrmalige, kurz aufeinander folgende Messungen einen Mittelwert zu bilden. Ein kurzzeitiges Anhalten des Rundballens ist nachteilig für die Durchsatzleistung der Rundballenpresse und stellt wegen der relativ hohen Rundballengewichte bis 1500 kg/Ballen Anwelkgut ein konstruktiv schwierig zu lösendes Problem dar, welches u. a. aufwendige, gesteuerte Bauelemente bedeutet

Der Erfindung liegt die Aufgabe zugrunde, eine konstruktiv einfache Wägeeinrichtung für Rundballen zu schaffen, welche eine hohe Meßgenauigkeit hat (Meßtoleranzen kleiner 2 %) und ohne Kalibrieraufwand leicht an vorhandenen Rundballenpressen nachrüstbar ist, insbesondere unter Eliminierung von Fahrwerkskräften und Verzicht auf bewegliche Bauelemente.

Diese Aufgabe wird erfindungsgemäß dadurch gelöst, daß die Rundballenpresse eine als Wägeeinrichtung ausgebildete Abrollvorrichtung für den fertigen Rundballen aufweist. Die erfindungsgemäße Wägeeinrichtung zeichnet sich durch einen besonders einfachen Aufbau aus, weil die vorhandene Abrollvorrichtung zur Messung der Ballengewichtskraft verwendet wird.

üblicherweise sind Rundballenpressen mit einer Abrollvorrichtung nach Art einer schiefen Ebene versehen, die den Rundballen bei Stillstand der Presse nach Aufklappen des Hintergehäuses und Auswurfs des Rundballens aus dem Preßraumgehäuse entlang der schiefen Ebene aus dem Schwenkbereich des Hintergehäuses abrollen läßt. Der Grundgedanke der Erfindung besteht darin, die freie Rollbewegung des Rundballens für seine Wägung zu nutzen, welches entscheidene Vorteile bietet:
- die Wägung des direkten Ballengewichts erfolgt unabhängig von Fahrwerks- und Preßkräften sowie der Gutzufuhr im Stillstand der Rundballenpresse und einenends auf dem Erdboden abgestützter Abrollvorrichtung;
- der Betriebsablauf der Rundballenpresse wird nicht behindert oder verzögert;
- die gesamte Wägeeinrichtung ist in die Abrollvorrichtung integriert und kann leicht nachgerüstet und insbesondere vor Anbau an die Rundballenpresse kalibriert werden;
- an der Rundballenpresse selbst sind keine Modifikationen notwendig;
- die Wägeeinrichtung erfordert keine beweglichen Wägeelemente;
- Quer- und Längsneigungen der Rundballenpresse lassen sich zur Korrektur der Wägeergebnisse einfach berücksichtigen.
- Meßabweichungen liegen unter 2 %.

Weitere zweckmäßige Ausbildungen ergeben sich aus den Unteransprüchen.

Sechs Beispiele des Erfindungsgegenstandes sind in der Zeichnung dargestellt und werden im folgenden näher beschrieben. Hierbei zeigt:
- Figur 1: eine schematische Seitenansicht einer Rundballenpresse mit Abrollvorrichtung und integrierter Wägeptattform;
- Figur 2: eine Ansicht gemäß Figur 1 einer zweiten Ausführungsform der Erfindung;
- Figur 3: eine Ansicht gemäß Figur 1 einer dritten Ausführungsform der Erfindung;
- Figur 4: eine Ansicht gemäß Figur 1 einer vierten Ausführungsform der Erfindung;
- Figur 5: eine Ansicht einer fünften Ausführungsform der Erfindung und
- Figur 6: eine Teilseitenansicht einer Rundballenpresse mit integrierter Vorrichtung zum Umwickeln von Ballen und daran angebrachter Abroll- und Wägevorrichtung.

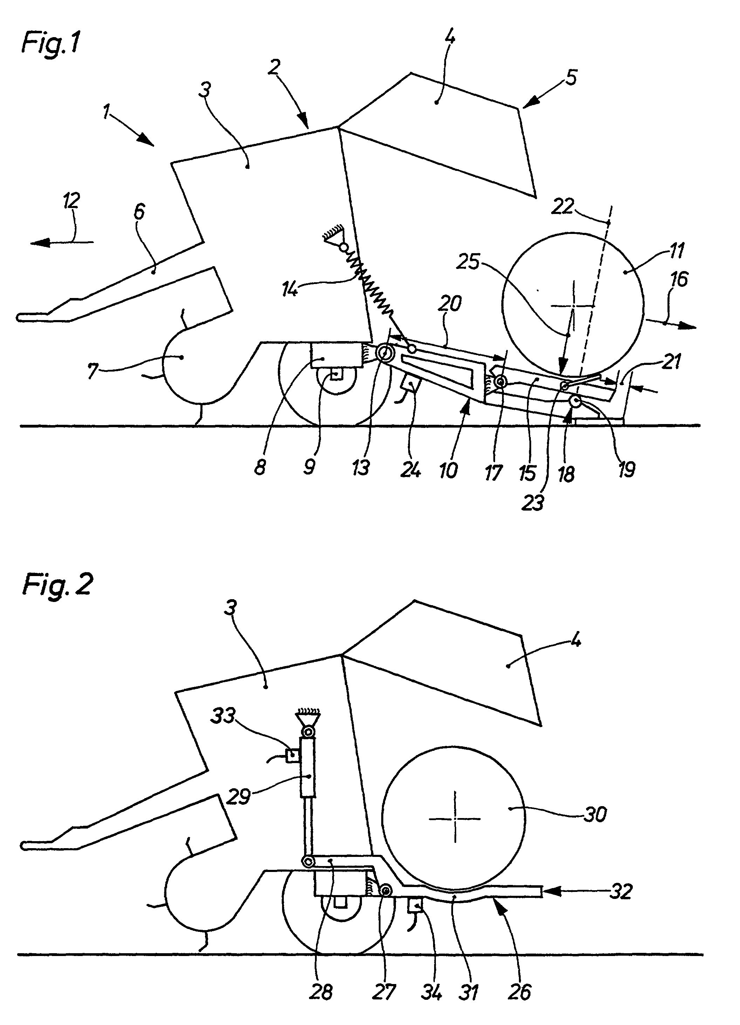

Hinsichtlich des Aufbaues und der Wirkungsweise einer Rundballenpresse mit Abrollvorrichtung kann auf die ältere deutsche Gebrauchsmusterschrift Nr. 82 13 107.4 verwiesen werden. Von einer derartigen Rundballenpresse 1 zeigt die nachstehende Figur 1 ein mit 2 gekennzeichnetes Preßraumgehäuse, bestehend aus einem gestellfesten Vordergehäuse 3 und einem um eine obere Schwenkachse aufklappbaren Hintergehäuse 4. Beide Gehäuseteile 3, 4 bilden in geschlossenem Zustand einen variablen oder konstanten, nicht dargestellten Preßraum zur Herstellung von Rundballen. In Figur 1 ist das Hintergehäuse 4 in aufgeklappter Stellung 5 nach Ballenauswurf gezeigt Das Vordergehäuse 3 ist über eine Zugdeichsel 6 an einen nicht dargestellten Schlepper ankuppelbar, weist eine Aufsammeleinrichtung 7 für das Erntegut auf und ruht auf einem Fahrgestell 8. Etwa in Höhe der Achse 9 ist am unteren Ende des Vordergehäuses 3 eine sich nach hinten erstreckende Abrollvorrichtung 10 für den aus dem Vordergehäuse 3 ausgeworfenen Rundballen 11 um eine quer zur Fahrtrichtung 12 horizontal gelegene Achse 13 schwenkbar angelenkt Eine zwischen Vordergehäuse 3 und Abrollvorrichtung 10 angeordnete Feder 14 zieht die Abrollvorrichtung 10 gegen einen nicht dargestellten Anschlag nach oben in eine nicht gezeigte obere Position, so daß das Hintergehäuse 4 ungehindert aufklappbar ist. Die Breite der Abrollvorrichtung 10 ist kleiner als die Innenbreite des Preßraumgehäuses 2. Sie kann aus zwei einzelnen, im Abstand nebeneinander angeordneten Rampen, einem U-förmigen Bügel oder auch von einer Platfform gebildet werden.

Auf der Abrollvorrichtung 10 ist als eine erste beispielsweise Ausführungsform der Erfindung eine Wägeplattform 15 zur Normalkraftmessung im Rollvorgang des Rundballens 11 angeordnet. Die Wägeplattform 15 ist beidseitig mit in Abrollrichtung 16 gesehen hinteren Bolzen/Laschenverbindungen 17 parallel zur Achse 13 mit der Abrollvorrichtung 10 verbunden und stützt sich mit Abstand in Abrollrichtung 16 gesehen nach vom versetzt auf einem vorderen Loslager 18 ab, das ein Kraftsensor 19 als Meßelement ist. Der Kraftsensor 19 ist so angeordnet und ausgeführt, daß er nur in orthogonaler Richtung zur Wägeplattform 15 wirkende Kräfte messen kann. Abmessung und Anordnung der Wägeplattform 15 sind so gewählt, daß ein Rundballen 11 nach Auswurf aus dem Vordergehäuse 3 aufgrund seines Eigengewichtes entlang der von der Abrollvorrichtung 10 gebildeten schiefen Ebene auf die Wägeplattform 15 rollt, während seiner weiteren Rollbewegung mit seinem Schwerpunkt kurzzeitig im rechten Winkel die Wirklinie 22 des Kraftsensors 19 durchläuft und von der Wägeplattform 15 abrolit, ohne gleichzeitig den Erdboden oder die Abrollvorrichtung 10 zu berühren. Entsprechend ist ein erster Mindestabstand 20 zwischen Drehachse 13 der Abrollvorrichtung 10 und Beginn der Wägeplattform 15 einzuhalten, damit der Rundballen 11 erst auf die Wägeplattform 15 rollt, wenn sich die Abrollvorrichtung 10 am Erdboden abstützt und ein zweiter Mindestabstand 21 zwischen Ende der Wägeplattform 15 und Ende der Abrollvorrichtung 10 notwendig, um Meßwertverfälschungen zu vermeiden. In der Wirklinie 22 des Kraftsensors 19 ist ein Überfahrschalter 23 angebracht, der ein elektrisches Signal erzeugt, wenn sich der Ballenschwerpunkt in Wirkrichtung des Kraftsensors 19 befindet. Ferner ist an der Abrollvorrichtung 10 direkt ein an sich bekannter Inklinomat 24, z. B. Modell EKN 455 der Firma TWK-Elektronik Düsseldorf, vorgesehen, um einerseits durch die Neigung der Abrollvorrichtung 10 und andererseits durch Längs- und Quemeigungen der Rundballenpresse 1 verfälschte Wägeergebnisse mit nur einem Meßinstrument zu korrigieren. Kraftsensor 19 und Inklinomat 24 sowie ggfs. Überfahrschalter 23 stehen in Wirkverbindung mit einer nicht dargestellten Auswerteeinheit und einer ebenfalls nicht dargestellten Ausgabeeinheit, z. B. Display, Drucker oder elektronischem Speicher.

Die Funktionsweise der in die Abrollvorrichtung 10 integrierten Wägeplattform 15 ist wie folgt:

Nach Fertigstellung des Rundballens und Öffnen des Hintergehäuses 4 fällt der Rundballen 11 unmittelbar auf die zunächst in ihrer oberen Position befindliche Abrollvorrichtung 10. Aufgrund des Balleneigengewichtes verschwenkt nun die Abrollvorrichtung 10 mit dem Rundballen 11 nach unten, bis sich die Abrollvorrichtung 10 am Erdboden abstützt und eine schiefe Ebene bildet. Der Rundballen 11 fährt dabei in Abrollrichtung 16 weiter auf die Wägeplattform 15. Ist der Ballenschwerpunkt in der Wirklinie 22 des Kraftsensors 19, z. B. signalisiert durch Überfahrschalter 23, erfolgt die Messung der vom rollenden Rundballen 11 auf die Wägeplattform 15 ausgeübten Normalkraft 25, die dann in der Auswerteeinheit mittels des Winkels, den die Abrollvorrichtung 16 mit der Horizontalen einschließt und weiterer Inklinometersignale in das tatsächliche Ballengewicht umgerechnet und in der Ausgabeeinheit angezeigt bzw. registriert wird.

Das in Figur 2 dargestellte Funktionsprinzip ist eine Druckmessung im Absenkvorgang einer Abrollvorrichtung 26. Die Abrollvorrichtung 26 ist um eine gestellfeste Achse 27 schwenkbar am unteren Ende des Vordergehäuses 3 montiert und durch einen Winkelhebel 28 mit einem am Vordergehäuse 3 gelagerten Hydrozylinder 29 verbunden. Beim Öffnen des Hintergehäuses 4 fängt die Abrollvorrichtung 26 einen Rundballen 30 in einer vorgefertigten Mulde 31 auf, welcher sich dadurch in einer geometrisch definierten Position befindet. Das Balleneigengewicht bewirkt eine Abwärtsbewegung der Abrollvorrichtung 26 mit dem Rundballen gegen den Druck des Hydrozylinders 29. Die Geometrie zwischen Abrollvorrichtung 26 und Hydrozylinder 29 ist so gewählt, daß der Hydrozylinder 29 im rechten Winkel zur Abrollvorrichtung 26 steht, wenn sich diese in waagerechter Position 32 befindet. Das Gewicht ist nach dem Hebelgesetz ermittelbar. In der Zuleitung des Hydrozylinders 29 ist dazu ein Drucksensor 33 montiert Ein an der Abrollvorrichtung 26 montierter Winkelsensor 34 gewährleistet die richtige Wägeposition. Beide Sensoren 33, 34 stehen mit einer Auswerteeinheit in Verbindung. Bei weiterer Absenkung der Abrollvorrichtung 26 rollt der Rundballen 30 aus der Mulde 31 auf den Erdboden.

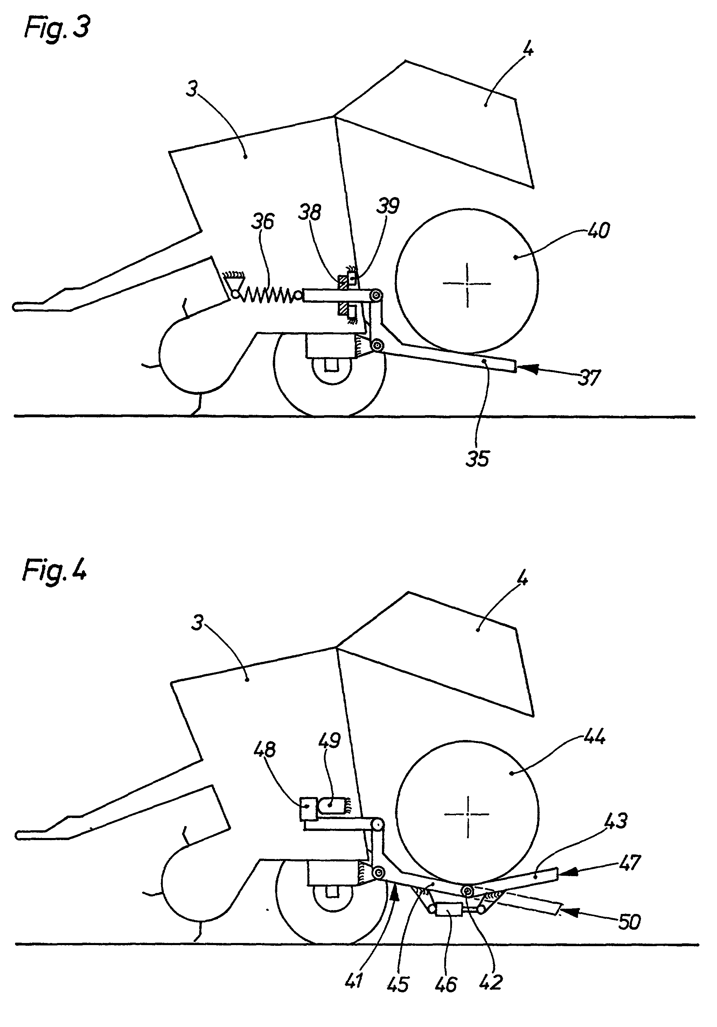

Die in Figur 3 gezeigte Variante einer Abrollvorrichtung 35 wird durch eine Zugfeder 36 in einer oberen, nicht dargestellten Position gehalten. In einer unteren Position 37 stützt sich ein mit der Abrollvorrichtung 35 fest verbundener Kraftsensor 38 so an ortsfesten Anschlägen 39 des Vordergehäuses 3 ab, daß die Abrollvorrichtung 35 eine sich nicht auf dem Erdboden abstützende schiefe Ebene bildet. Fällt ein Rundballen 40 auf die Abrollvorrichtung 35, so weicht diese mit dem Rundballen 40 gegen die Kraft der Zugfeder 36 nach unten aus, bis der Kraftsensor 38 gegen den Anschlag 39 stößt. Durch weiteres Hinabrollen des Rundballens 40 entsteht über die Hebelwirkung ein ansteigendes Kraftsignal, welches am Ende der Abrollvorrichtung 35 ein Maximum erreicht. Ober den Neigungswinkel der Abrollvorrichtung 35 und die Hebelarmverhältnisse errechnet eine Auswerteeinheit mit Hilfe der Signale eines Piezo-Kraftringes die Gewichtskraft bzw. das Gewicht des Rundballens 40, wobei die Kraft der Feder 36 bei der Auswertung zu berücksichtigen ist.

Die in Figur 4 dargestellte Abrollvorrichtung 41 ist als um eine horizontale Querachse 42 verstellbare Schere 43 ausgeführt. Bei diesem Prinzip wird ein statischer Zustand angestrebt, bei dem der Rundballen 44 in einer festen Position aufgefangen und gewogen wird. Die Funktion ist wie folgt Vor dem Ballenausstoß werden die Scherenhälften 43, 45 mittels eines Hydrozylinders 46 in eine in Figur 4 in Vollinie dargestellte Wägeposition 47 geklappt Ein mit der Abrollvorrichtung 41 verbundener Anschlag 48 liegt an einem am Vordergehäuse 3 angeordneten Druckkraftsensor 49 an. Nach Ausstoß eines Rundballens 44 fällt dieser in die von den Scherenhälften 43, 45 gebildete Mulde und wird für die Dauer einer korrekten Messung in dieser gehalten. Der Druckkraftsensor 49 gibt aufgrund der Hebelverhältnisse ein Signal ab, welches in einer Auswerteeinheit mit einem in Versuchen ermittelten Korrekturfaktor in das Ballengewicht umgerechnet wird. Nach der Wägung wird der Hydrozylinder 46 entlastet, wodurch die hintere Scherenhälfte 43 ihre in Strichlinie dargestellte Abrollposition 50 für den Ballen einnimmt

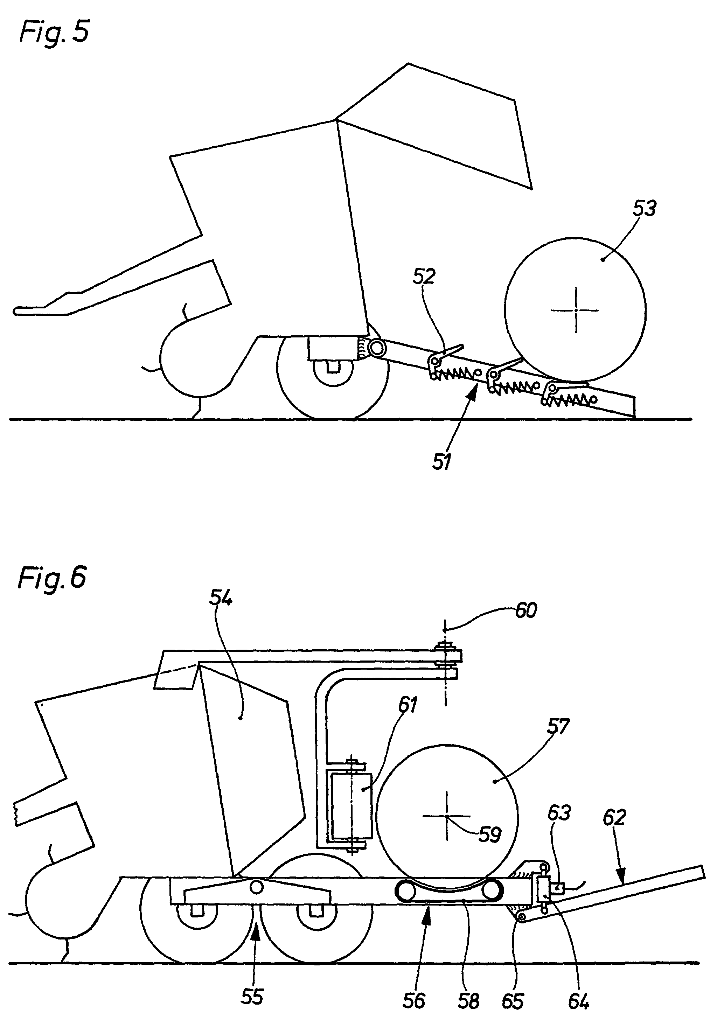

Figur 5 zeigt eine Abrollvorrichtung 51 mit drei im Abstand hintereinander angeordneten Überfahrschaltem 52, die jeweils ein Signal erzeugen, wenn der Ballen 53 bzw. sein Mittelpunkt darüber fährt. Die Abstände zwischen den Überfahrschaltem sind fest definiert. Der Zeitabstand zwischen den Schaltern 52 ist einfach zu ermitteln. Aus Weg, Zeit und Neigungswinkel der Abrollvorrichtung 51 gegenüber der Horizontalen läßt sich die Beschleunigung des Ballens 53 und Ober Ballenabmessung, Materialdichte und Reibwert die Ballenmasse errechnen. Prinzipiell reichen dafür auch einfach gemessene Beschleunigungsdaten, also wenigstens zwei Überfahrschalter 52 aus.

Im Rahmen der Erfindung können die vorstehend dargestellten und beschriebenen, als Wägeeinrichtung ausgebildeten Abrollvorrichtungen, nicht nur an Rundballenpressen, sondern auch an Vorrichtungen zum Umwickeln von Rundballen angeordnet sein. Figur 6 zeigt in Teilansicht eine Rundballenpresse 54 mit einem Fahrgestell 55, das gleichzeitig eine Vorrichtung 56 zum Umwickeln von Rundballen 57 mit Folie trägt. Die Rundballen 57 werden somit nach Ausstoß aus der Rundballenpresse 54 erst auf einen Wickeltisch 58 übergeben, welcher den Rundballen 57 um seine Zylinderachse 59 dreht, während der Rundballen 57 von einer um eine vertikale Achse 60 umlaufenden Folienrolle 61 mit Folie eingewickelt wird. Damit der folienumwickelte Rundballen 57 nicht bei der Abgabe vom Wickeltisch 58 aus relativ großer Höhe auf den Boden fällt, wird der Rundballen 57 erst auf eine Abrollvorrichtung 62 gegeben, die die den Rundballen 57 dann durch entsprechendes Absenken in Bodennähe abgibt. Die Ballenwägung kann z. B. durch einen Drucksensor 63 im Hydraulikkreislauf des Hydrozylinders 64 zum Absenken der Abrollvorrichtung 62 um eine Schwenkachse 65 angeordnet sein.

## Patentansprüche

1. Landwirtschaftliche Rundballenpresse mit einer Wägeeinrichtung zur Erfassung der Gewichtskraft von gepreßten Rundballen aus Heu, Stroh oder angewelktem Grüngut, **dadurch gekennzeichnet, daß** die Rundballenpresse (1, 54) eine als Wägeeinrichtung (15, 19, 23, 24, 29, 31, 33, 34, 38, 39, 43, 45, 49, 52, 63, 64) ausgebildete Abrollvorrichtung (10, 26, 35, 41, 51, 62) für den fertigen Rundballen aufweist.

2. Landwirtschaftliche Rundballenpresse nach Anspruch 1, **dadurch gekennzeichnet, daß** im Rahmen der Abrollvorrichtung (10) eine Wägeplattform (15) angeordnet ist, welche sich durch mindestens einen Kraftsensor (19) auf dem Rahmen der Abrollvorrichtung (10) abstützt.

3. Landwirtschaftliche Rundballenpresse nach Anspruch 2, **dadurch gekennzeichnet, daß** die Wägeplattform (15) als Normalkraft-Meßeinrichtung ausgestaltet ist, welche die vom Rundballen (11) während seines Abrollens auf die Wägeplattform (15) ausgeübte Normalkraft (25) mißt.

4. Landwirtschaftliche Rundballenpresse nach Anspruch 2 oder 3, **dadurch gekennzeichnet, daß** die Wägeplattform (15) um eine horizontale, quer zur Fahrtrichtung (12) gelegene Achse (13) schwenkbar ist, und daß der Kraftsensor (19) in Abrollrichtung (16) des Rundballens (11) mit Abstand nach hinten relativ zur Achse (13) angeordnet ist.

5. Landwirtschaftliche Rundballenpresse nach den Ansprüchen 2 bis 4, **dadurch gekennzeichnet, daß** das Ende der Wägeplattform (15) in Abrollrichtung (16) des Rundballens (11) gesehen zum Ende der Abrollvorrichtung (10) einen Sicherheitsabstand (21) einhält.

6. Landwirtschaftliche Rundballenpresse nach einem oder mehreren der vorhergehenden Ansprüche 2 bis 5, **dadurch gekennzeichnet, daß** Mittel (23, 52) vorgesehen sind zur Erzeugung eines Signales, wenn sich der Rundballenschwerpunkt in der Wirklinie (22) des Kraftsensors (19) befindet.

7. Landwirtschaftliche Rundballenpresse nach Anspruch 6, **dadurch gekennzeichnet, daß** die Mittel Überfahrschalter (23, 52) oder elektronische Zeitglieder sind.

8. Landwirtschaftliche Rundballenpresse nach einem oder mehreren der vorhergehenden Ansprüche 1 bis 7, **dadurch gekennzeichnet, daß** eine Meßeinrichtung (34) für den Winkel vorgesehen ist, den die Abrollvorrichtung (10) mit der Horizontalen einschließt.

9. Landwirtschaftliche Rundballenpresse nach einem oder mehreren der vorhergehenden Ansprüche 1 bis 8, **dadurch gekennzeichnet, daß** eine Korrektureinrichtung der durch Schiefstellung der Rundballenpresse verfälschten Wägeergebnisse vorgesehen ist, wie ein an sich bekannter Inklinomat (24).

10. Landwirtschaftliche Rundballenpresse nach Anspruch 9, **dadurch gekennzeichnet, daß** die Meßeinrichtung (24) und/oder die Korrektureinrichtung an der Abrollvorrichtung (10, 26, 35, 41, 51, 62) angebracht sind/ist.

11. Landwirtschaftliche Rundballenpresse nach einem der Ansprüche 1, 9, 10, **dadurch gekennzeichnet, daß** die Abrollvorrichtung (26) eine Fangmulde (31) für den Rundballen aufweist und durch eine Kraft-, Druck- oder Momentmeßeinrichtung (33) mit dem Gestell (3) der Rundballenpresse (1) verbunden ist, um die Absenkkraft der Abrollvorrichtung (26) aufgrund des Balleneigengewichtes in waagerechter Halteposition (32) als Maß für die Gewichtskraft des Ballens zu messen.

12. Landwirtschaftliche Rundballenpresse nach einem der Ansprüche 1, 9, 10, **dadurch gekennzeichnet, daß** die Abrollvorrichtung (35) nach Art einer schiefen Ebene ausgebildet und durch eine Kraft-, Druck- oder Momentmeßeinrichtung (38) mit dem Gestell (3) der Rundballenpresse verbunden ist, und eine Lastmessung erfolgt, wenn der Ballenschwerpunkt Ober das freie Ende der nicht auf dem Erdboden abgestützten Abrollvorrichtung (35) läuft.

13. Landwirtschafltiche Rundballenpresse nach einem der Ansprüche 1, 9, 10, **dadurch gekennzeichnet, daß** die Abrollvorrichtung (41) als steuerbare Schere (43, 45) ausgebildet ist mit einer ersten Wägeposition (47), in der die Schere (43, 45) eine Mulde zum Halten des Rundballens für die Dauer einer korrekten Messung bildet und einer zweiten Abrollposition (50), in der der Rundballen auf einer schiefen Ebene auf den Erdboden rollt.

14. Landwirtschaftliche Rundballenpresse nach einem oder mehreren der vorhergehenden Ansprüche, **dadurch gekennzeichnet, daß** die Kraft-, Druck- oder Momentmeßeinrichtung (19, 33, 38, 49, 63), die Korrektureinrichtung (24), die Meßeinrichtung (34) für den Winkel und/oder der/die Überfahrschalter (23, 52) mit einer Auswerteelektronik verbunden sind, welche aus den Signalen die tatsächliche Ballengewichtskraft und -masse errechnet und über eine Ausgabeeinheit, z. B. Display, Drucker oder elektronischen Speicher dem Bediener zur Verfügung stellt.

15. Landwirtschaftliche Rundballenpresse mit einer Vorrichtung (56) zum Umwickeln des fertigen Rundballens (57) mit Folie auf einem gemeinsamen Fahrgestell (55) und einer Abrollvorrichtung (62) zum Ablegen des folienumhüllten Rundballens (57) nach einem oder mehreren der vorhergehenden Ansprüche, **dadurch gekennzeichnet, daß** die als Abrollvorrichung (62) ausgebildete Wägeeinrichtung (63, 64) für den fertig umhüllten Rundballen (57) an der Vorrichtung (56) zum Umwickeln des fertigen Rundballens (57) mit Folie angeordnet ist.

## Claims

1. An agricultural round baler with a weighing means for determining the force due to weight of compressed round bales of hay, straw or wilted green crop, **characterised in that** the round baler (1, 54) comprises a chute device (10, 26, 35, 41, 51, 62) for the finished round bale which takes the form of a weighing means (15, 19, 23, 24, 29, 31, 33, 34, 38, 39, 43, 45, 49, 52, 63, 64).

2. An agricultural round baler according to claim 1, **characterised in that** a weighing platform (15) is arranged in the frame of the chute device (10), which weighing platform (15) is supported on the frame of the chute device (10) by at least one force sensor (19).

3. An agricultural round baler according to claim 2, **characterised in that** the weighing platform (15) takes the form of a normal force measuring means, which measures the normal force (25) exerted on the weighing platform (15) by the round bale (11) during discharge thereof.

4. An agricultural round baler according to claim 2 or claim 3, **characterised in that** the weighing platform (15) may be pivoted about a horizontal axis (13) arranged perpendicular to the direction of travel (12), and **in that** the force sensor (19) is arranged spacedly downstream relative to the axis (13) in the discharge direction (16) of the round bale (11).

5. An agricultural round baler according to claims 2 to 4, **characterised in that** the end of the weighing platform (15) is arranged at a safe distance (21) from the end of the chute device (10) when viewed in the discharge direction (16) of the round bale (11).

6. An agricultural round baler according to one or more of preceding claims 2 to 5, **characterised in that** means (23, 52) are provided to generate a signal when the centre of gravity of the round bale is located in the active line (22) of the force sensor (19).

7. An agricultural round baler according to claim 6, **characterised in that** the means are overrun switches (23, 52) or electronic timing elements.

8. An agricultural round baler according to one or more of preceding claims 1 to 7, **characterised in that** a measuring means (34) is provided for the angle which the chute device (10) forms with the horizontal.

9. An agricultural round baler according to one or more of preceding claims 1 to 8, **characterised in that** a means is provided for correcting the weighing results falsified by a slanted position of the round baler, such as an inclinometer (24) known per se.

10. An agricultural round baler according to claim 9, **characterised in that** the measuring means (24) and/or the correction means is/are attached to the chute device (10, 26, 35, 41, 51, 62).

11. An agricultural round baler according to one of claims 1, 9, 10, **characterised in that** the chute device (26) comprises a catch trough (31) for the round bale and is connected to the frame (3) of the round baler (1) by a force, pressure or moment measuring means (33), in order to measure the lowering force of the chute device (26) as a result of the bale's own weight in the horizontal holding position (32) as a measure of the force due to weight of the bale.

12. An agricultural round baler according to one of claims 1, 9, 10, **characterised in that** the chute device (35) takes the form of an inclined plane and is connected to the frame (3) of the round baler by a force, pressure or moment measuring means (38), and **in that** load measurement is performed when the centre of gravity of the bale runs over the free end of the chute device (35) not supported on the ground.

13. An agricultural round baler according to one of claims 1, 9, 10, **characterised in that** the chute device (41) takes the form of controllable scissors (43, 45) with a first, weighing position (47), in which the scissors (43, 45) form a trough for holding the round bale during correct measurement, and a second, discharge position (50), in which the round bale rolls over an inclined plane onto the ground.

14. An agricultural round baler according to one or more of the preceding claims, **characterised in that** the force, pressure or moment measuring means (19, 33, 38, 49, 63), the correction means (24), the measuring means (34) for the angle and/or the overrun switch(es) (23, 52) are connected with evaluation electronics, which calculate the actual force due to bale weight and bale mass from the signals and make them available to the user via an output unit, e.g. display, printer or electronic memory.

15. An agricultural round baler having a device (56) for wrapping the finished round bale (57) in film on a common chassis (55) and a chute device (62) for discharging the film-wrapped round bale (57) according to one or more of the preceding claims, **characterised in that** the weighing means (63, 64) constructed as chute device (62) for the finished, wrapped round bale (57) is arranged on the device (56) for wrapping the finished round bale (57) in film.

## Revendications

1. Presse agricole à balles rondes avec dispositif de pesage, destinée à enregistrer le poids de balles rondes comprimées de foin, de paille ou de produit de base préfané, **caractérisée en ce que** la presse à balles rondes (1, 54) présente un dispositif dérouleur (10, 26, 35, 41, 51, 62) prenant la forme d'un dispositif de pesage (15, 19, 23, 24, 29, 31, 33, 34, 38, 39, 43, 45, 49, 52, 63, 64) pour les balles rondes terminées.

2. Presse agricole à balles rondes selon la revendication 1, **caractérisée en ce que**, dans le bâti du dispositif dérouleur (10) est disposée une plate-forme de pesage (15), qui repose au moins sur le bâti du dispositif dérouleur (10) grâce à au moins un détecteur de forces (19).

3. Presse agricole à balles rondes selon la revendication 2, **caractérisée en ce que** la plate-forme de pesage (15) est conçue sous forme de dispositif de mesure à force normale, qui mesure la force normale (25) exercée par la balle ronde (11) lorsqu'elle se déroule sur la plate-forme de pesage (15).

4. Presse agricole à balles rondes selon la revendication 2 ou 3, **caractérisée en ce que** la plate-forme de pesage (15) peut pivoter autour d'un axe (13) horizontal, perpendiculaire à la direction de déplacement (12), et **en ce que** le détecteur de forces (19) est disposé dans la direction du déroulement (16) de la balle ronde (11), moyennant quoi il existe un écart vers l'arrière par rapport à l'axe (13).

5. Presse agricole à balles rondes selon les revendications 2 à 4, **caractérisée en ce que** l'extrémité de la plate-forme de pesage (15) maintient une distance de sécurité (21) avec l'extrémité du dispositif dérouleur (10), vu dans le sens du déroulement (16) de la balle ronde (11).

6. Presse agricole à balles rondes selon l'une quelconque des revendications précédentes 2 à 5, **caractérisée en ce que** des moyens (23, 52) sont prévus pour produire un signal lorsque le centre de gravité des balles rondes se trouve dans la ligne d'action (22) du détecteur de forces (19).

7. Presse agricole à balles rondes selon la revendication 6, **caractérisée en ce que** les moyens sont des contacteurs de présence (23, 52) ou des temporisateurs électroniques.

8. Presse agricole à balles rondes selon l'une ou plusieurs des revendications précédentes 1 à 7, **caractérisée en ce qu'**un appareil de mesure (34) est prévu pour mesurer l'angle formé par le dispositif dérouleur (10) avec l'horizontale.

9. Presse agricole à balles rondes selon une ou plusieurs des revendications précédentes 1 à 8, **caractérisée en ce qu'**il est prévu un appareil de correction des résultats de pesage faussés en raison de la situation en profondeur de la presse à balles rondes, par exemple un inclinomètre (24).

10. Presse agricole à balles rondes selon la revendication 9, **caractérisé en ce que** l'appareil de mesure (24) et/ou l'appareil de correction est/sont apposé(s) sur le dispositif dérouleur (10, 26, 35, 41, 51, 62).

11. Presse agricole à balles rondes selon l'une quelconque des revendications 1, 9, 10, **caractérisée en ce que** le dispositif dérouleur (26) présente un bac de réception (31) pour la balle ronde et est raccordé au châssis (3) de la presse à balles rondes (1) par un appareil de mesure des forces, de la pression ou des moments (33), pour mesurer la force de descente du dispositif dérouleur (26) due au poids propre des balles, en position de maintien horizontale (32), servant de mesure pour le poids de la balle.

12. Presse agricole à balles rondes selon l'une quelconque des revendications 1, 9, 10, **caractérisée en ce que** le dispositif dérouleur (35) est conçu comme un plan incliné et est raccordé au châssis (3) de la presse à balles rondes par un appareil de mesure des forces, de la pression ou des moments (38) et une mesure de la charge est effectuée lorsque le centre de gravité arrive sur l'extrémité libre du dispositif dérouleur (35) qui ne repose pas à terre.

13. Presse agricole à balles rondes selon l'une quelconque des revendications 1, 9, 10, **caractérisée en ce que** le dispositif dérouleur (41) se présentant sous la forme de cisailles (43, 45) maniables, présente une première position de pesage (47) dans laquelle la cisaille (43, 45) constitue une cavité pour maintenir la balle ronde pendant la durée d'une mesure correcte et une deuxième position de déroulement (50), dans laquelle la balle ronde roule sur un plan incliné pour arriver au niveau de la terre.

14. Presse agricole à balles rondes selon l'une ou plusieurs des revendications précédentes, **caractérisée en ce que** l'appareil de mesure des forces, de la pression et des moments (19, 33, 38, 49, 63), l'appareil de correction (24), l'appareil de mesure (34) pour mesurer l'angle et/ou le contacteur de présence (23, 52) sont raccordés à un appareil électronique d'évaluation, qui calcule le poids et la masse réels des balles à partir des signaux et met le résultat à disposition de l'utilisateur à l'aide d'une unité d'émission, par exemple un écran, une imprimante ou une mémoire électronique.

15. Presse agricole à balles rondes, présentant un dispositif (56) pour envelopper la balle ronde (57) terminée avec une feuille sur un chariot commun (55) et un dispositif dérouleur (62) pour déposer la balle ronde (57) enveloppée d'une feuille selon l'une quelconque ou plusieurs des revendications précédentes, **caractérisée en ce que** le dispositif de pesage (63, 64) conçu comme un dispositif dérouleur (62) pour les balles rondes enveloppées terminées (57) est disposé au niveau du dispositif (56) pour envelopper la balle ronde terminée (57) avec une feuille.
